# EUROPEAN PATENT APPLICATION

(11) **EP 2 436 254 A1**
(43) Date of publication of application: **04.04.2012**
(21) Application number: 10182385.4
(22) Date of filing: 29.09.2010
(51) Int. Cl.: A01C 23/02

(54) **Rotary distribution valve**

(71) Applicant: Duport B.V., 7701 SG Dedemsvaart (NL)
(72) Inventor: Westerman, Hendrik, 7701 JB, DEDEMSVAART (NL); Hommes, Floribert Diederik, 7772 DP, HARDENBERG (NL)
(74) Representative: de Lange, Hendrik Cornelis

(57) **Abstract**

The invention relates to a rotary distribution valve, suitable for fluid injection into soil, comprising a shaft (2) having a mounting end (2A), configured to be mounted on a frame (41) and a free hanging end (2B); a distribution carrousel (31) with a cup shaped distribution chamber (37); a seal (24); wherein the cup shaped distribution chamber (37) surrounds the free hanging end (2B) of the shaft (2) and the seal (24) is arranged between an inner wall (17) of the cup shaped distribution chamber (37) and the shaft (2).

## Description

The invention relates to a rotary distribution valve. More specifically, the invention relates to a distribution valve for the distribution of fluid to injection pins for in soil injection.

These devices are for instance described in the international application WO03/008375. In this document, an apparatus is described for the application of a fluid into a sod. The apparatus is equipped with a rotating drum, on which injection spikes are mounted. The apparatus is further equipped with a rotary valve, which directs fluid to those spikes that are protruding downwards into the sod.

The rotary valve, is provided with a shaft, which is mounted on one side and is free hanging on the other. A hub with a distribution chamber is borne by two bearings on the shaft, allowing the hub to rotate. The distribution chamber is provided between the two bearings and the distribution chamber end is on both sides sealed by bushings, seen in a direction parallel to the shaft, wherein the bushings are kept in place by washers and snap rings.

This arrangement is however complex in its structure, difficult to service and prone to leakage.

Accordingly it is an object of the invention to mitigate or solve the above described and/or other problems of rotary distribution valves in the art, while maintaining and/or improving the advantages thereof.

More specifically an object of the invention can be to provide a rotary distribution valve, which is simpler in its construction, easier to maintain and service and less prone to wear and leakage.

These and/or other objects are reached by a rotary distribution valve, suitable for fluid injection into soil, comprising a shaft having a mounting end, configured to be mounted on a frame and a free hanging end; a distribution carrousel with a cup shaped distribution chamber; a seal; wherein the cup shaped distribution chamber surrounds the free hanging end of the shaft and the seal is arranged between an inner wall of the cup shaped distribution chamber and the shaft.

By this arrangement the distribution carrousel is arranged on one side of the bearings that support the hub, and only one seal can be necessary. Furthermore the carrousel can be easier reached, dismounted, serviced and repaired. In the distribution chamber, liquid can be distributed, wherein the liquid can comprise mineral nutrients. These mineral nutrients can form crystals that can be detrimental when entering the bearings. Since the carrousel can be opened from one side and thus can be equipped with only one seal, the possible ingress of nutrient containing liquids in the bearings can be reduced.

Since the carrousel comprises parts that are prone to wear, it needs to be inspected and opened several times during its service life. By the above described arrangement, this service can be performed without taking the shaft off the frame it is mounted on.

In the rotary distribution valve the seal can comprises an intermediate ring. This ring can be arranged such that against a portion of the intermediate ring, an O-ring or other type of seal ring can seal off, while rotating around the intermediate ring. Thus the friction actions of seal rings can be exerted on the intermediate ring, such that during maintenance the intermediate ring can be replaced. The intermediate ring can be a non metal ring, for example a ceramic, plastic or thermo set ring. These materials are less likely to wear of when corrosive and/or abrasive conditions are present.

The seal can comprise at least one elastic ring that is configured to seal off against and to be able to rotate relative to the intermediate ring during service. When mineral component nutrients are applied, the mineral components can be electrolytes, which enhance corrosive effects on metal. Besides, the mineral components, when crystallized provide abrasive effects on any surface, along with the seal ring is moving along. A non metal intermediate ring can be less prone to both effects, such that a better seal is provided that needs less service and maintenance during the service life of the rotary valve.

The elastic ring can be arranged in an inner groove in the hub or in the inner wall of the distribution chamber. Alternatively, the elastic ring can be arranged in an outer groove of the shaft.

The seal can comprise a second elastic ring, which contacts a surface of the intermediate ring. This second elastic ring can be arranged in an inner or outer groove of the intermediate ring. Thus the ring can be contained in a space. The second elastic ring can be configured to seal off the space between the intermediate ring and the shaft. Alternatively, the elastic ring can be configured to seal off the space between the intermediate ring and the inner wall of the hub or between the intermediate ring and the inner wall of the distribution chamber. The first and/or the second elastic ring can be e.g. O-ring(s) . These O-rings are readily available in various standard sizes.

In order to further elucidate the invention, exemplary embodiments will be described with reference to the drawing. In the drawing:
Figure 1 represents a schematic perspective exploded view of a rotary valve according to a first embodiment of the invention;
Figure 2 represents a schematic perspective partially cut out view of the valve according to figure 1; and
Figure 3 represents a schematic perspective view of a rotary distribution valve mounted in a fluid injector frame.

The figures represent specific exemplary embodiments of the inventions and should not be considered limiting the invention in any way or form. Throughout the description and the figures the same or corresponding reference numerals are used for the same or corresponding elements.

The expression "surround the free hanging end of a shaft" used herein is to be understood as, though not to be considered limited to provide a closed coverage of cylindrical end portion of the shaft as well as the abutting surface of the shaft. For example a cup shaped form, having a substantially cylindrical wall and a bottom portion can surround a free hanging end of a shaft.

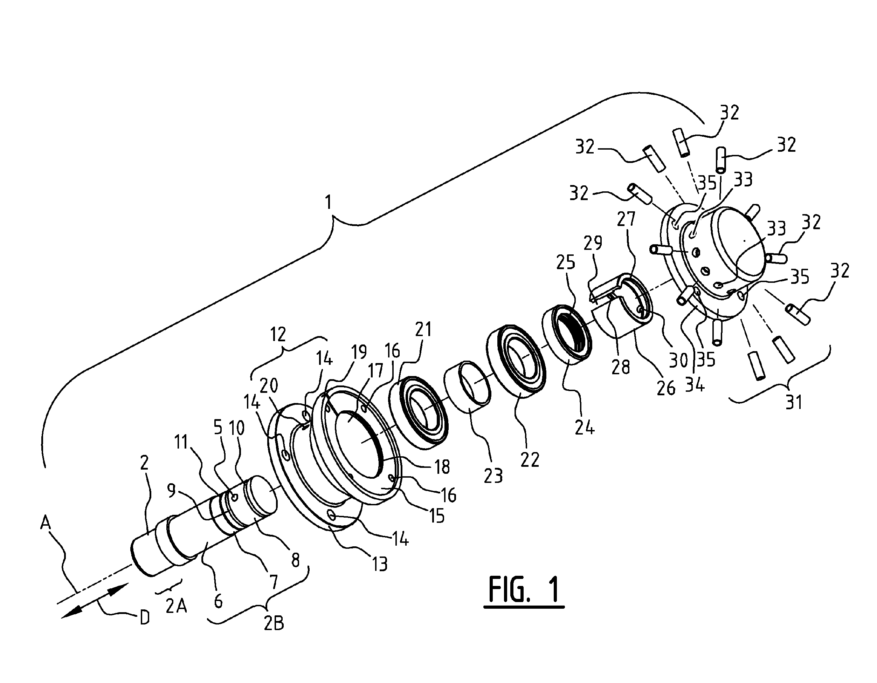

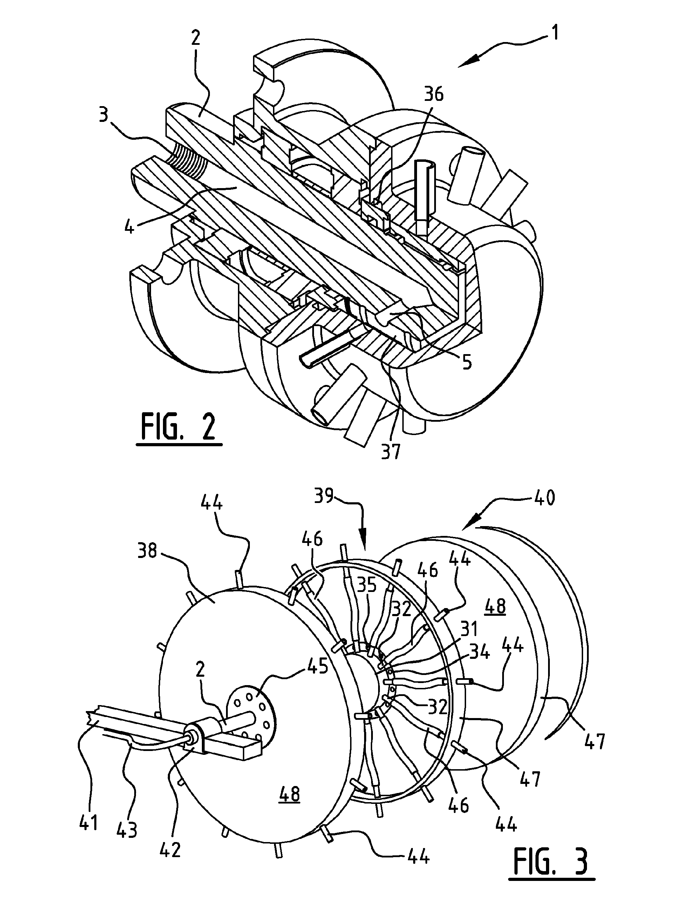

In figure 1, an exploded view of the distribution valve according to an embodiment of the invention is presented. In this figure, a shaft 2 is provided having a mounting end 2A and a free hanging end 2B. The mounting end can be fixedly attached to a frame 41 of for instance a tractor mountable injection device. The shaft 2 is provided with a supply conduit 4 in its interior, as can be seen in figure 2. This supply conduit 4 can be drilled through the central axis A of the shaft 2. The supply conduit 4 can be connected to a supply source through the conduit connection thread 3. On or at the free hanging end 2A of the shaft 2, the supply conduit 4 exits the shaft 2 by means of bore 5. The bore 5 can be provided in a third portion 8 of the shaft 2, in axial direction D seen in between grooves 9 and 10.

The third portion 8 of the shaft can have a slightly smaller diameter than second portion 7 of the shaft, which can have a slightly smaller diameter than the first portion 6 of the shaft 2, such that a stepped reduction in diameter of shaft 2 can be provided. This can improve the ease of mounting, maintenance and service of the rotary distribution valve 1.

Around the first portion 6, two bearings 21 and 22 can be positioned, with a spacer ring 23, seen in axial direction D, positioned in between the bearings 21 and 22. The bearings 21 and 22 can be press fitted on the first portion 6 of the shaft 2, such that they can remain in position during service of the rotary distribution valve 2. Around the outer circumference of the bearings 21 and 22 an inner wall 17 of a hub 12 can be placed. This inner wall 17 can similarly be press fitted around the outer circumference of the bearings 21 and 22. During this press fitting, the spacer ring 23 can prevent the bearings 21 and 22 from leaving their position on the first portion 6 of the shaft 2.

The hub 12 is provided with a first flange 13 and a second flange 15. The first flange 13 is provided with bores, such that an injector wheel 38, 39 or 40 as can be seen in figure 3, can be mounted thereon. Alternatively a distribution drum, as disclosed in WO03/008375 may be mounted thereon. The connection portion 45 of an injector wheel 38, 39 and 40 can be mounted on the flange 13 by means of e.g. nuts and bolts.

Returning to figure 1, the hub 12 can be provided with a greasing bore 20 in which a greasing nipple can be mounted.

The second flange 15 is provided with bores 16 for mounting flange 34 of carrousel 31 thereto. For a relative rapid mounting, the bores 16 may be provided with inner thread such that bolts might be tightened therein directly. The flange 15 can be provided with a fluid escape channel 19, through which fluid can escape in the unlikely event, the rotary distribution valve 1 might leak.

In the inner wall 17 of the hub 12, a groove 18 is provided. In the groove 18 a snap ring (not shown) can be inserted to prevent the bearings 21 and 23 and the spacer ring 23 from moving.

Around the second portion 7 of the shaft 2, a intermediate ring 24 is arranged. This ring can be manufactured from a plastic material, a thermo set material or a ceramic material. Other materials may be applicable as well, the ring may be manufactured from any non metal material of construction.

The intermediate ring 24 is provided with an inner groove 25, in which a seal ring, e.g. an O-ring can be contained. The intermediate ring 24, with a seal ring contained in the groove 25 can be press fitted on the second portion 7 of the shaft 2. Between the second portion 7 and the third portion 8 of the shaft, a groove 11 is provided. In the groove 11, a snap ring (not shown) can be inserted. The snap ring can prevent the intermediate ring 24 from moving.

In the inner wall of the distribution chamber 37 an inner groove 36 is provided. This groove is configured to contain a seal ring such as an O-ring. This O-ring can be configured to seal off against the outer circumference of the intermediate ring, while it can be allowed to rotate around the intermediate ring.

Around the third portion 8 of the shaft 2, a distribution ring 26 can be positioned. The third portion 8 of the shaft 2 is provided with two grooves 10 and 11, in which further seal rings can be contained. The inner wall of the distribution ring 26 is provided with two grooves 27 and 28, which grooves correspond in size, shape and mutual distance to the grooves 9 and 10 of the third portion 8 of the shaft 2.

In the spaces formed by the grooves 9 and 28 and by the grooves 10 and 27 seal rings, e.g. O-rings can be contained. The seal rings prevent fluid from distributing through a distribution chamber 37 and exert a spring action on the distribution ring 26, such that the outer wall of the distribution ring 26 is forced against the inner wall of the distribution chamber 37. Since the distribution ring 26 is provided with a distribution opening 29, which extends over the full length of the distribution ring 26, seen in axial direction D, the distribution ring can be allowed some radial deformation without undue forces.

The distribution ring 26 is provided with a bore 30. In this bore 30, a pin (not show) can be inserted which can be partially and inserted in the third portion 8 of the shaft 2. This pin can prevent the distribution ring 26 from turning around the third portion 8 of the shaft 2. Since the shaft 2 is mounted fixedly to the frame 41, the distribution opening 29 should be kept facing downward for reasons explained herein below.

Around the third portion 8 of the shaft 2 with the distribution ring 26 held in position, the carrousel 31 can turn. The carrousel 31 is provided with a number of radial bores 33. In each of the bores 33 a fluid line connector 32 is mounted, to which a spike connecting line 46 can be attached, as can be seen in figure 3.

The bores 33, the fluid line connector 32 and the spike connecting lines 46 connect the distribution chamber with injection spikes 44. The bores 33 are closed off from the fluid connection chamber 37 by the outer wall of the distribution ring 26. Only that bore that passes the distribution opening 29 of the distribution ring 26 will be in fluid connection with the distribution chamber 37 and with the bore 5 and the supply conduit 4. Thus fluid will only be allowed to be distributed to that injection spike 44, which is connected to the bore 33 and to the fluid line connector 32 that passes the distribution opening 29.

If the distribution opening 29 is facing downward, only the spike 44 pointing downward can be provided with fluid. Exactly that spike 44 is the one that is forced in the soil, such that that spike 44 can be provided with fluid, while the remaining spikes 44 are left idle, till these are forced in the soil themselves.

Figure 3 depicts a set of injector wheels 38, 39 and 40 mounted on a frame 41. The frame 41 can for instance be a tractor mountable frame, or e.g. a frame portion of a machine specially adapted for soil injection.

In figure 3, the shaft 2 is mounted on the frame 41 by means of a mounting bracket 42. Alternatively the shaft 2 can be attached to the frame 41 in many other ways. The injector wheels 38, 39 and 40 can be manufactured as e.g. rotation symmetrical ellipsoidal shells 48 with an outer rim 47. This specific shape provides maximum stiffness with a relative low amount of construction material. On the outer rim 47, injection spikes 44 can be mounted, that can be forced into soil by e.g. the gravitational force of the frame 41 and the wheels 39-40. Alternatively the pulling or pushing engine such as a tractor can provide additional weight and/or force, in order to force the spikes 44 into the soil.

Thus a fluid can be injected in the soil, while the spills on top of the soil can be prevented. This can lead to a well defined dosage and a reliable distribution of a fluid into the soil. While the construction of the rotary valve is less prone to leakage and is easier to be maintained and serviced, the invention can considerably reduce down time expenditure.

The invention is to be understood not to be limited to the exemplary embodiments shown in the figures and described in the specification. For instance the fluid escape channel 19 may be facing downward in the event the rotary distribution valve 1 is used for liquid injection. Alternatively, it may be facing upward in the event vapours or gasses are injected.

The injection wheels 38-40 are described herein as shells 48 with outer rims 49. Alternatively the injection wheels can be spoke wheels, in which for instance the spokes are rigid spike connecting pipes 46, through which the fluid to be injected can be distributed.

These and other modifications are considered to be variations that are part of the framework, the spirit and the scope of the invention outlined in the claims.

### List of reference signs

- 1.: Rotary distribution valve
- 2.: Shaft
- 2A.: Mounting end
- 2B.: Free hanging end
- 3.: Conduit connection thread
- 4.: Supply conduit
- 5.: Bore
- 6.: First shaft portion
- 7.: Second shaft portion
- 8.: Third shaft portion
- 9.: Groove
- 10.: Groove
- 11.: Groove
- 12.: Hub
- 13.: First flange
- 14.: Bore
- 15.: Second flange
- 16.: Bore
- 17.: Inner wall
- 18.: Groove
- 19.: Fluid escape channel
- 20.: Greasing bore
- 21.: Bearing
- 22.: Bearing
- 23.: Spacer ring
- 24.: Intermediate ring
- 25.: Groove
- 26.: Distribution ring
- 27.: Groove
- 28.: Groove
- 29.: Distribution opening
- 30.: Bore
- 31.: Carrousel
- 32.: Fluid line connectors
- 33.: Bore
- 34.: Flange
- 35.: Bore
- 36.: Groove
- 37.: Distribution chamber
- 38.: Injector wheel
- 39.: Injector wheel
- 40.: Injector wheel
- 41.: Frame
- 42.: Mounting bracket
- 43.: Supply line
- 44.: Injection spikes
- 45.: Mounting portion
- 46.: Spike connecting lines
- 47.: Outer rim
- 48.: Shell
- A.: Central axis
- D.: Axial direction

## Claims

1. A rotary distribution valve, suitable for fluid injection into soil, comprising
- a shaft having a mounting end, configured to be mounted on a frame and a free hanging end;
- a distribution carrousel with a cup shaped distribution chamber;
- a seal;
- wherein the cup shaped distribution chamber surrounds the free hanging end of the shaft and the seal is arranged between an inner wall of the cup shaped distribution chamber and the shaft.

2. The rotary distribution valve according to claim 1, wherein the seal comprises an intermediate ring.

3. The rotary distribution valve according to claim 2, wherein the intermediate ring is a non metal ring, for example a ceramic, plastic or thermo set ring.

4. The rotary distribution valve according to claim 3, wherein the seal comprises at least one elastic ring that is configured to seal off against and to be able to rotate relative to the intermediate ring during service.

5. The rotary distribution valve according to claim 4, wherein the elastic ring is arranged in an inner groove in the hub or in the inner wall of the distribution chamber or the elastic ring is arranged in an outer groove of the shaft.

6. The rotary distribution valve according to claim 5, wherein the seal comprises a second elastic ring, which contacts a surface of the intermediate ring.

7. The rotary distribution valve according to claim 4, wherein the second elastic ring is arranged in an inner or outer groove of the intermediate ring.

8. The rotary distribution ring according to claim 7, wherein the second elastic ring is configured to seal off the space between the intermediate ring and the shaft or the inner wall of the hub or the inner wall of the distribution chamber.

9. The rotary distribution valve according to any of the claims 2-8, wherein the first and/or the second elastic ring is/are O-ring(s).
